# EUROPEAN PATENT APPLICATION

(11) **EP 4 492 137 A1**
(43) Date of publication of application: **15.01.2025**
(21) Application number: 23803695.8
(22) Date of filing: 03.04.2023
(51) Int. Cl.: G03B 21/14, G03B 21/54, H04N 9/31, H04N 21/422, G06F 3/16

(54) **PORTABLE PROJECTOR CAPABLE OF UP-DOWN MOVEMENT**

(30) Priority: 09.05.2022 KR 20220056859; 29.08.2022 KR 20220108686
(71) Applicant: Samsung Electronics Co., Ltd, Suwon-si, Gyeonggi-do 16677 (KR)
(72) Inventor: EUM, Sanghoon, Suwon-si Gyeonggi-do 16677 (KR); SUNG, Giseok, Suwon-si Gyeonggi-do 16677 (KR); JEONG, Gohwoon, Suwon-si Gyeonggi-do 16677 (KR); JUNG, Dosung, Suwon-si Gyeonggi-do 16677 (KR)
(74) Representative: Appleyard Lees IP LLP
(86) International application number: PCT/KR2023/004442
(87) International publication number: WO 2023/219270

(57) **Abstract**

A mobile projector includes: a main body including a projector; a left moving part disposed on a left side of the main body; a right moving part disposed on a right side of the main body symmetrically with the left moving part; a left elevating part disposed between the left side of the main body and the left moving part to move the left moving part up and down with respect to the main body; and a right elevating part disposed between the right side of the main body and the right moving part to move the right moving part up and down with respect to the main body.

## Description

### [Technical Field]

The disclosure relates to a projector, and more particularly, to a mobile projector capable up-down movement.

### [Background Art]

A projector is a device that projects an image, and may be called a display device.

The projector projects light onto a screen to create an image, making it easier to create a large picture than other types of display devices.

Previously, projectors were used only in limited places such as companies, schools, and the like.

However, recently, as the performance of projectors has improved and their size has become smaller, projectors are widely used at home and outdoors.

### [Disclosure of Invention]

### [Technical Solution]

According to an embodiment of the disclosure, a mobile projector may include: a main body including a projector; a left moving part on a left side of the main body; a right moving part on a right side of the main body symmetrically with the left moving part; a left elevating part between the left side of the main body and the left moving part, the left elevating part configured to move the left moving part up and down with respect to the main body; and a right elevating part between the right side of the main body and the right moving part, the right elevating part configured to move the right moving part up and down with respect to the main body.

The mobile projector may include an auxiliary moving part on a lower surface of the main body.

The left elevating part may include: a left elevating plate on which the left moving part is disposed, the left elevating plate configured to move up and down with respect to the left side of the main body; and a left elevating driver inside the main body and configured to move the left elevating plate up and down. The right elevating part may include a right elevating plate on which the right moving part is disposed, the right elevating plate configured to move up and down with respect to the right side of the main body; and a right elevating driver disposed inside the main body and configured to move the right elevating plate up and down.

The mobile projector may include a first pair of linear movement guide members between the left elevating plate and the left side of the main body and configured to guide up and down movement of the left elevating plate; and a second pair of linear movement guide members between the right elevating plate and the right side of the main body and configured to guide up and down movement of the right elevating plate.

The left elevating driver may include: a left elevating motor in the main body; a left pinion configured to be rotated by the left elevating motor; and a left rack on the left elevating plate and meshed with the left pinion. The right elevating driver may include a right elevating motor in the main body; a right pinion configured to be rotated by the right elevating motor; and a right rack on the right elevating plate and meshed with the right pinion.

The left moving part may include a left wheel motor on the left elevating plate; and a left wheel configured to be rotated by the left wheel motor. The right moving part may include a right wheel motor on the right elevating plate; and a right wheel configured to be rotated by the right wheel motor.

The projector may be detachably disposed in the main body.

The main body may include a projector accommodating portion, wherein the projector is detachably disposed in the projector accommodating portion; and a base below the projector accommodating portion, wherein the left elevating part and the right elevating part are on the base.

The mobile projector may include a processor configured to individually control the left moving part, the right moving part, the left elevating part, and the right elevating part.

The main body may include at least one sensor, wherein the at least one sensor includes at least one from among an image sensor, a distance sensor, a direction sensor, and an illuminance sensor.

The processor may be configured to control the left moving part, the right moving part, the left elevating part, and the right elevating part based on a signal input from the at least one sensor to adjust size, position, height, and horizontality of an image projected by the projector.

According to an embodiment of the disclosure, an image projecting method performed by a mobile projector may include: receiving a projection command; searching for a projectable surface; transmitting information about a searched projectable surface; receiving projection information; moving to a position corresponding to the projection information that is received; and projecting an image corresponding to the projection information.

The projecting the image corresponding to the projection information may include controlling, by the mobile projector, at least one from a left moving part, a right moving part, a left elevating driver, and a right elevating driver of the mobile projector to adjust at least one from among a size, position, height, and horizontality of the image that is projected.

According to an embodiment of the disclosure, a method for forming a projection system of a mobile projector may include acquiring, by a first mobile projector, spatial information of surroundings of the first mobile projector; determining, by the first mobile projector, that a second mobile projector exists based on the spatial information that is acquired; transmitting, by the first mobile projectors, projector connection information based on determining that the second mobile projector exists; receiving, by the first mobile projector, a response to the projector connection information; and connecting, by the first mobile projector, the second mobile projector based on the response to the projector connection information indicating that the second mobile projector is to be connected.

The method may further include projecting an image by the first mobile projector and the second mobile projector.

### [Brief Description of Drawings]

FIG. 1 is a perspective view illustrating a mobile projector according to an embodiment of the disclosure.
FIG. 2 is a perspective view illustrating a state in which left and right wheels are separated from the mobile projector of FIG. 1.
FIG. 3 is an exploded perspective view illustrating the mobile projector of FIG. 1.
FIG. 4 is a cross-sectional view illustrating the mobile projector of FIG. 1 taken along line I-I.
FIG. 5 is a cross-sectional view illustrating the mobile projector of FIG. 1 taken along line II-II.
FIG. 6 is a perspective view illustrating a drive device of a mobile projector according to an embodiment of the disclosure.
FIG. 7 is a perspective view illustrating a state in which a main body of a mobile projector is elevated according to an embodiment of the disclosure.
FIG. 8 is a perspective view illustrating a driving part of a mobile projector according to an embodiment of the disclosure.
FIG. 9 is a view illustrating arrangement of internal components of a mobile projector according to an embodiment of the disclosure.
FIG. 10 is a functional block diagram of a mobile projector according to an embodiment of the disclosure.
FIG. 11 is a flowchart for explaining an image projection method of a mobile projector according to an embodiment of the disclosure.
FIG. 12 is a view conceptually illustrating a space where a mobile projector is located according to an embodiment of the disclosure.
FIG. 13 is a view for explaining a method of adjusting horizontality of a projection image.
FIG. 14 is a view for explaining a method of correcting a distorted projection image.
FIG. 15 is a view for explaining a method of correcting a distorted projection image.
FIG. 16 is a flowchart for explaining a method of forming a projection system with a mobile projector according to an embodiment of the disclosure.
FIG. 17 is a view illustrating a state in which two mobile projectors form a projection system according to an embodiment of the disclosure.
FIG. 18 is a view illustrating a state in which three mobile projectors form a projection system according to an embodiment of the disclosure.
FIG. 19 is a view illustrating a state in which two mobile projectors project one image according to an embodiment of the disclosure.
FIG. 20 is a flowchart for explaining a method of projecting one image by two mobile projectors according to an embodiment of the disclosure.
FIG. 21 is a view illustrating a state in which one mobile projector projects an image according to an embodiment of the disclosure.
FIG. 22 is a view illustrating a state in which another mobile projector is added in the state of FIG. 21 and two mobile projectors project one image.
FIG. 23 is a flowchart for explaining a method of two mobile projectors projecting one image when another mobile projector is added in the state of FIG. 21.
FIG. 24 is a view illustrating a state in which two mobile projectors project one image in a state in which relative positions of the two mobile projectors are changed in the state of FIG. 19.
FIG. 25 is a flowchart for explaining a method of two mobile projectors projecting one image when relative positions of the two mobile projectors are changed in the state of FIG. 19.
FIG. 26 is a view illustrating a state in which another mobile projector is added in the state of FIG. 19 and three mobile projectors project one image.
FIG. 27 is a flowchart for explaining a method of three mobile projectors projecting one image when another mobile projector is added in the state of FIG. 19.
FIG. 28 is a view illustrating a state in which two mobile projectors project one image at the same height according to an embodiment of the disclosure.
FIG. 29 is a view illustrating a state in which the height of one mobile projector is changed in the state of FIG. 28.
FIG. 30 is a flowchart for explaining a method of maintaining the images projected by two mobile projectors to be the same when the state of FIG. 28 is changed to the state of FIG. 29.

### [Best Mode for Carrying out the Invention]

Since the embodiments of the disclosure can apply various transformations and have various embodiments, specific embodiments will be illustrated in the drawings and described in detail in the detailed description. However, this is not intended to limit the scope to the specific embodiments, and should be understood to include various modifications, equivalents, and/or alternatives of the embodiment of the disclosure. In connection with the description of the drawings, like reference numerals may be used for like elements.

In describing the disclosure, when it is determined that a detailed description of a related known function or configuration may unnecessarily obscure the gist of the disclosure, a detailed description thereof will be omitted.

In addition, the following embodiments may be modified in many different forms, and the scope of the technical idea of the disclosure is not limited to the following embodiments. Rather, these embodiments are provided so that this disclosure will be thorough and complete, and will fully convey the spirit of the disclosure to those skilled in the art.

Terms used in this disclosure are only used to describe specific embodiments, and are not intended to limit the scope of rights. Singular expressions include plural expressions unless the context clearly dictates otherwise.

In this disclosure, expressions such as "has," "can have", "includes," or "can include" indicate the existence of a corresponding feature (e.g., numerical value, function, operation, or component such as a part) and do not preclude the existence of additional features.

In this disclosure, expressions such as "A or B," "at least one of A or/and B," or "one or more of A or/and B" may include all possible combinations of the items listed together. For example, "A or B," "at least one of A or/and B," or "one or more of A or/and B" may refer to all cases (1) including at least one A, (2) including at least one B, or (3) including both at least one A and at least one B.

Expressions such as "first," "second," "primary," or "secondary," as used in this disclosure may modify various components regardless of order and/or importance, are used only to distinguish one component from other components, and do not limit the corresponding components.

Further, terms such as `leading end', `rear end', 'upper side', 'lower side', 'top end', `bottom end', etc. used in the disclosure are defined with reference to the drawings. However, the shape and position of each component are not limited by these terms.

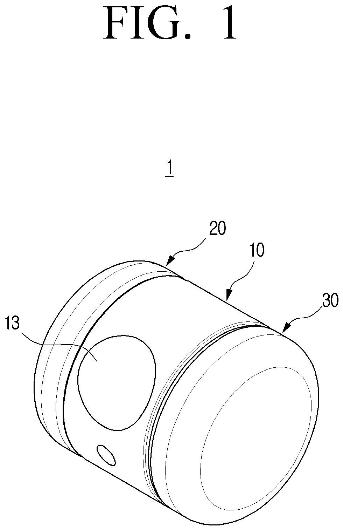

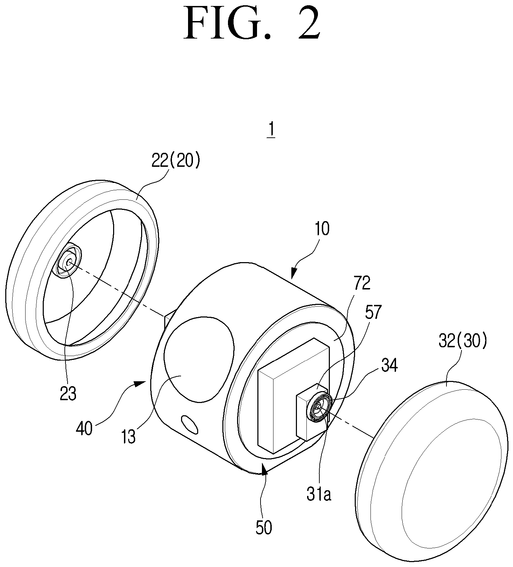

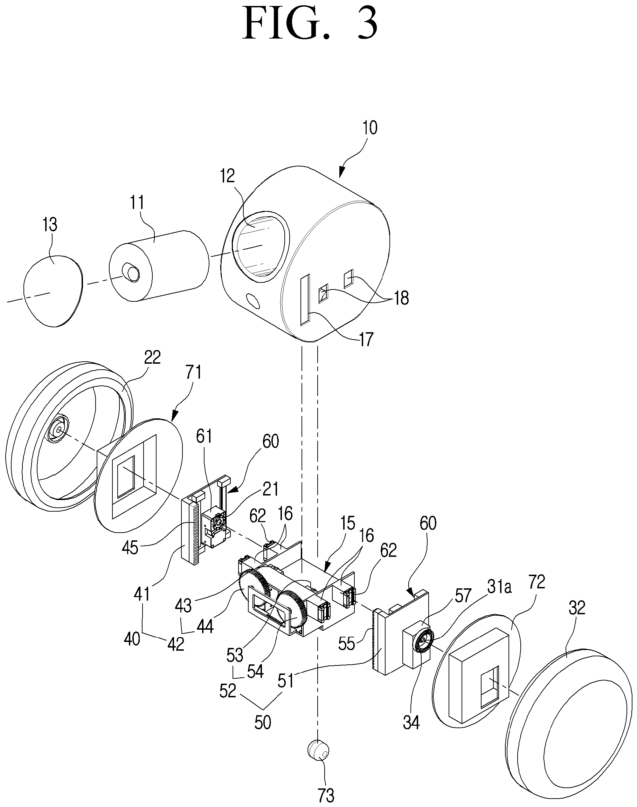

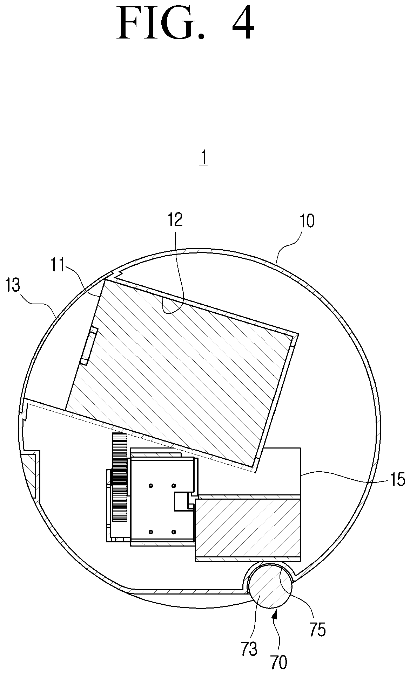

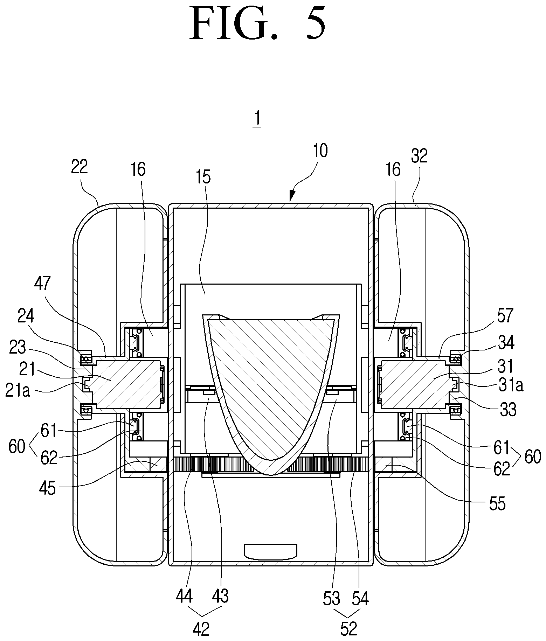

FIG. 1 is a perspective view illustrating a mobile projector according to an embodiment of the disclosure. FIG. 2 is a perspective view illustrating a state in which a left wheel 22 and a right wheel 32 are separated from the mobile projector of FIG. 1. FIG. 3 is an exploded perspective view illustrating the mobile projector of FIG. 1. FIG. 4 is a cross-sectional view illustrating the mobile projector of FIG. 1 taken along a line I-I. FIG. 5 is a cross-sectional view illustrating the mobile projector of FIG. 1 taken along a line II-II.

Referring to FIGS. 1 to 5, a mobile projector 1 according to an embodiment of the disclosure may include a main body 10, moving parts 20 and 30, and elevating parts 40 and 50.

The main body 10 forms the exterior of the mobile projector 1. A projector 11 and a drive device may be disposed inside the main body 10. The main body 10 may be formed in a substantially hollow cylindrical shape. One side of the main body 10 may be configured to be open and closed.

The main body 10 may include the projector 11. The projector 11 may be disposed detachably from the main body 10. The projector 11 may be disposed in the main body 10 so as to emit an image in an upwardly inclined direction with respect to the horizontal plane. The projector 11 may be configured to project an image onto a screen or wall. Accordingly, the projector 11 may be disposed in the main body 10 to project an image toward a screen or wall.

The main body 10 may include a projector accommodating portion 12 in which the projector 11 is detachably disposed. The projector accommodating portion 12 may be provided inside the main body 10. The projector accommodating portion 12 may be formed in a shape corresponding to the projector 11. For example, when the projector 11 is formed in a cylindrical shape, the projector accommodating portion 12 may be formed as a hollow cylinder corresponding to the projector 11.

The main body 10 may include a projector cover 13 disposed at the entrance of the projector accommodating portion 12. The projector cover 13 may be transparent to allow light emitted from the projector 11 disposed in the projector accommodating portion 12 to pass through.

The projector accommodating portion 12 may include a fixing device configured to selectively fix the projector 11 inserted therein. The fixing device may be formed as a one-touch coupling device.

In addition, a base 15 may be provided inside the main body 10. The base 15 may be provided below the projector accommodating portion 12. The base 15 may be disposed at the lower portion of the main body 10.

The moving parts 20 and 30 may be disposed on the left and right sides of the main body 10. The moving parts may include a left moving part 20 disposed on the left side of the main body 10 and a right moving part 30 disposed on the right side of the main body 10. The right moving part 30 may be disposed symmetrically with the left moving part 20. The right moving part 30 and the left moving part 20 may be configured to be identical to each other.

The elevating parts 40 and 50 may be disposed between the main body 10 and the moving parts 20 and 30. The elevating parts may include a left elevating part 40 disposed on the left side of the main body 10 and a right elevating part 50 disposed on the right side of the main body 10. The left elevating part 40 and the right elevating part 50 may be disposed on the base 15 provided inside the main body 10. The left elevating part 40 and the right elevating part 50 may be disposed symmetrically with respect to the base 15.

The left elevating part 40 may be disposed between the left side of the main body 10 and the left moving part 20. The left elevating part 40 may be configured to move the left moving part 20 up and down with respect to the main body 10.

The left elevating part 40 may include a left elevating plate 41 and a left elevating driver 42.

The left elevating plate 41 may be disposed to move up and down with respect to the left side of the main body 10. A pair of linear movement guide members 60 may be provided between the left elevating plate 41 and the left side of the main body 10 to guide the vertical movement of the left elevating plate 41. Accordingly, the left elevating plate 41 may move linearly up and down with respect to the main body 10.

The left moving part 20 may be disposed on the left elevating plate 41. Accordingly, the left moving part 20 may move up and down integrally with the left elevating plate 41. The left moving part 20 may be configured to move the main body 10 back and forth.

The left elevating driver 42 may be disposed inside the main body 10. The left elevating driver 42 may be configured to move the left elevating plate 41 up and down. Accordingly, the left elevating driver 42 may move the left moving part 20 up and down.

The right elevating part 50 may be disposed between the right side of the main body 10 and the right moving part 30. The right elevating part 50 may be configured to move the right moving part 30 up and down with respect to the main body 10.

The right elevating part 50 may include a right elevating plate 51 and a right elevating driver 52.

The right elevating plate 51 may be disposed to move up and down with respect to the right side of the main body 10. A pair of linear movement guide members 60 may be provided between the right elevating plate 51 and the right side of the main body 10 to guide the vertical movement of the right elevating plate 51. Accordingly, the right elevating plate 51 may move linearly up and down with respect to the main body 10.

The right moving part 30 may be disposed on the right elevating plate 51. Accordingly, the right moving part 30 may move up and down integrally with the right elevating plate 51. The right moving part 30 may be configured to move the main body 10 back and forth. The right moving part 30 may be configured to move the main body 10 forward and backward together with the left moving part 20.

The right elevating driver 52 may be disposed inside the main body 10. The right elevating driver 52 may be configured to move the right elevating plate 51 up and down. Accordingly, the right elevating driver 52 may move the right moving part 30 up and down.

The left moving part 20, the right moving part 30, the left elevating part 40, and the right elevating part 50 may form configure a drive device 3 of the mobile projector 1. The right moving part 30 may be configured to have the same structure as the left moving part 20, and may be arranged symmetrically with the left moving part 20. In addition, the right elevating driver 52 may be configured to have the same structure as the left elevating driver 42, and may be arranged symmetrically with the left elevating driver 42.

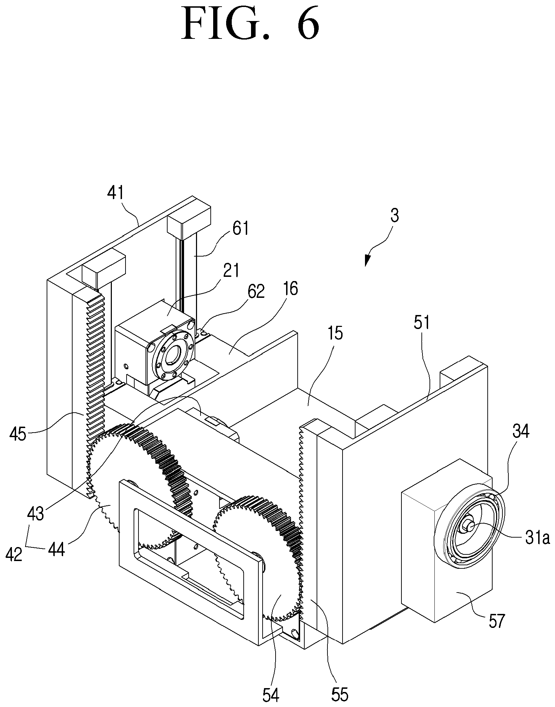

FIG. 6 is a perspective view illustrating a drive device of a mobile projector according to an embodiment of the disclosure.

Referring to FIG. 6, the left elevating driver 42 may be disposed on the base 15. The base 15 may be disposed in the main body 10. The base 15 may be disposed below the projector accommodating portion 12 of the main body 10.

The left elevating driver 42 may include a left elevating motor 43 that moves the left moving part 20 up and down. The left elevating motor 43 may be disposed in the main body 10. That is, the left elevating motor 43 may be fixed to the base 15 provided in the main body 10. The left elevating motor 43 may generate a rotational force that moves the left elevating plate 41 on which the left moving part 20 is disposed up and down.

Aleft pinion 44 may be fixed to a shaft of the left elevating motor 43. The left pinion 44 may rotate integrally with the shaft of the left elevating motor 43. A pinion opening 17 (see FIG. 3) through which the left pinion 44 is exposed may be provided on the left side of the main body 10.

Aleft rack 45 may be provided on the left elevating plate 41. The left rack 45 may be disposed perpendicular to the left elevating plate 41. The left rack 45 is disposed so as to engage with the left pinion 44 exposed through the pinion opening 17 of the main body 10. Therefore, when the left elevating motor 43 rotates, the left rack 45 may move linearly up and down by the left pinion 44.

The left elevating plate 41 may be formed separately from the main body 10. The left elevating plate 41 may be disposed to move up and down with respect to the main body 10. The left elevating plate 41 may be disposed to move linearly up and down with respect to the base 15 of the main body 10.

The left elevating plate 41 may be formed as a substantially rectangular flat plate. The left rack 45 may be disposed on one surface of the left elevating plate 41 facing the base 15. The left rack 45 may be disposed on one side end of the left elevating plate 41.

The pair of linear movement guide members 60 may be disposed between the left elevating plate 41 and the base 15. The pair of linear movement guide members 60 may guide the left elevating plate 41 to move linearly up and down with respect to the base 15.

The linear movement guide members 60 may include a linear motion guide (LM guide) 61 and a linear motion block (LM block) 62. The LM block 62 is disposed to be able to move in a straight line with respect to the LM guide 61. The LM guide 61 may be disposed on one surface of the left elevating plate 41. The LM block 62 may be disposed on one side of the base 15 facing the left elevating plate 41.

A pair of LM guides 61 may be disposed in parallel at regular intervals on the left elevating plate 41. A pair of LM blocks 62 may be disposed at regular intervals on the left side of the base 15. A pair of protrusions 16 spaced apart at regular intervals may be provided on the left side of the base 15. The pair of LM blocks 62 may be disposed at the tips of the pair of protrusions of the base 15.

A pair of openings 18 through which the pair of protrusions 16 of the base 15 pass may be provided on the side of the main body 10. Accordingly, the pair of LM blocks 62 may be located outside the left side of the main body 10.

The pair of LM blocks 62 exposed to the outside of the main body 10 through the pair of openings 18 may be coupled to the pair of LM guides 61 of the left elevating plate 41. Accordingly, the left elevating plate 41 may move linearly up and down with respect to the base 15 by the pair of LM guides 61 and the pair of LM blocks 62.

In this embodiment, the LM guide 61 and the LM block 62 are used as the linear movement guide members 60, but embodiments of the disclosure are not limited thereto. The linear movement guide members 60 may be configured in various ways as long as they can linearly move the left elevating plate 41 up and down with respect to the base 15.

The left rack 45 may be disposed on the left elevating plate 41 in parallel with the pair of LM guide 61. Therefore, when the left elevating motor 43 operates, the left elevating plate 41 may move linearly up and down by the left pinion 44 and the left rack 45 engaged with each other.

The left moving part 20 may be disposed on the left elevating plate 41. Therefore, when the left elevating plate 41 moves up and down by the left elevating motor 43, the left moving part 20 may move up and down.

The left moving part 20 may include a left wheel motor 21 and a left wheel 22.

The left wheel motor 21 may be disposed on the left elevating plate 41. The left wheel motor 21 may be disposed between the pair of LM guides 61 disposed on the left elevating plate 41. The left wheel motor 21 may be disposed on one surface of the left elevating plate 41 facing the base 15. The rear portion of the left wheel motor 21 may be accommodated between the pair of protrusions 16 provided on the left side of the base 15.

The left wheel motor 21 may include a reducer. That is, the left wheel motor 21 may be a motor in which a reducer is integrated.

A shaft 21a of the left wheel motor 21 may be disposed to protrude from the opposite surface of the left elevating plate 41. That is, the shaft 21a of the left wheel motor 21 may be disposed to protrude from the opposite surface of the left elevating plate 41 that does not face the base 15. Hereinafter, one surface of the left elevating plate 41 facing the base 15 is referred to as the inner surface of the left elevating plate 41, and the opposite surface of the left elevating plate 41 that does not face the base 15 is referred to as the outer surface of the left elevating plate 41.

The left wheel 22 may be fixed to the shaft 21a of the left wheel motor 21. The left wheel 22 may be formed to rotate integrally with the shaft 21a of the left wheel motor 21. Therefore, when the left wheel motor 21 operates, the left wheel 22 may rotate.

The left elevating plate 41 may be provided with a motor accommodating portion 47 in which the left wheel motor 21 is accommodated. The motor accommodating portion 47 may be formed as a protrusion protruding outward from the outer surface of the left elevating plate 41. The motor accommodating portion 47 may be formed as a concave groove on the inner surface of the left elevating plate 41 facing the base 15. The motor accommodating portion 47 may be formed as a groove with a shape corresponding to the front portion of the left wheel motor 21. Therefore, the left wheel motor 21 may be stably disposed in the motor accommodating portion 47 of the left elevating plate 41.

A bearing 24 may be disposed on the outer surface of the motor accommodating portion 47. The bearing 24 is formed to support the rotation of the left wheel 22. For example, the bearing 24 may be formed as a ball bearing.

Referring to FIG. 5, the left wheel 22 may include a boss 23 to which the shaft of the left wheel motor 21 is coupled. The boss 23 may be disposed in the center of the left wheel 22. The boss 23 may be supported by the bearing 24 disposed in the motor accommodating portion 47. Therefore, when the shaft 21a of the left wheel motor 21 is coupled to the boss 23, the left wheel 22 may be rotated by the left wheel motor 21.

A left dust cover 71 (see FIG. 3) may be disposed between the left elevating plate 41 and the left wheel 22. The left dust cover 71 may be formed to prevent foreign substances from penetrating into the left wheel 22. The left dust cover 71 may be disposed on the outer surface of the left elevating plate 41. The circumference of the left dust cover 71 may be formed in a circular shape corresponding to the left wheel 22. However, the left dust cover 71 may not be disposed between the left elevating plate 41 and the left wheel 22. That is, the left dust cover 71 may be selectively disposed on the left elevating plate 41.

The right elevating driver 52 may be disposed on the base 15. The right elevating driver 52 may include a right elevating motor 53 provided in the base 15. A right pinion 54 may be provided on the shaft of the right elevating motor 53. The right pinion 54 may be engaged with a right rack 55 provided on the right elevating plate 51.

The right elevating motor 53, the right pinion 54, and the right rack 55 of the right elevating driver 52 may be the same as the left elevating motor 43, the left pinion 44, and the left rack 45 of the left elevating driver 42. Therefore, repeated descriptions thereof may be omitted.

A pair of linear movement guide members 60 may be disposed between the right side of the base 15 and the right elevating plate 51. The pair of linear movement guide members 60 may include an LM guide 61 and an LM block 62. The pair of linear movement guide members 60 disposed between the right side of the base 15 and the right elevating plate 51 are the same as the pair of linear movement guide members 60 disposed between the left side of the base 15 and the left elevating plate 41 described above. Therefore, repeated description thereof may be omitted.

A pinion opening 17 through which the right pinion 54 is exposed and a pair of openings 18 through which the pair of LM blocks 62 are exposed may be provided on the right side of the main body 10.

The right moving part 30 may be disposed on the right elevating plate 51. The right moving part 30 may include a right wheel motor 31 disposed on the right elevating plate 51. A right wheel 32 may be disposed on the shaft 31a of the right wheel motor 31. Accordingly, the right wheel 32 may be rotated by the right wheel motor 31.

A motor accommodating portion 57 in which the right wheel motor 31 is disposed may be provided on the right elevating plate 51. A bearing 34 supporting the right wheel 32 may be disposed on the outer surface of the motor accommodating portion 57. The right wheel 32 may include a boss 33 to which a shaft 31a of the right wheel motor 31 is coupled.

The right elevating plate 51 and the right wheel motor 31 and right wheel 32 of the right moving part 30 may be the same as the left elevating plate 41 and the left wheel motor 21 and left wheel 22 of the left moving part 20 described above. Therefore, repeated descriptions thereof may be omitted.

A right dust cover 72 may be disposed between the right elevating plate 51 and the right wheel 32. The right dust cover 72 may be the same as the left dust cover 71 described above. Therefore, repeated description thereof may be omitted.

An auxiliary moving part 70 may be disposed on the lower surface of the main body 10. The auxiliary moving part 70 may include an auxiliary wheel 73. A bottom groove 75 in which the auxiliary wheel 73 is disposed may be provided on the lower surface of the main body 10. The auxiliary wheel 73 may be rotatably disposed in the bottom groove 75.

The auxiliary moving part 70 may include an elastic member that supports the auxiliary wheel 73 so as to support the main body 10 when the main body 10 is raised and lowered by the left elevating part 40 and the right elevating part 50.

The auxiliary moving part 70 may be disposed to support the main body 10 at three points together with the left moving part 20 and the right moving part 30. For example, the left wheel 22, the right wheel 32, and the auxiliary wheel 73 may support the main body 10 at three points.

A processor 90 configured to individually control the left moving part 20, the right moving part 30, the left elevating part 40, and the right elevating part 50 may be disposed inside the main body 10. For example, the processor 90 may be configured to control the left wheel motor 21, the right wheel motor 31, the left elevating motor 43, and the right elevating motor 53.

Hereinafter, the operation of the mobile projector 1 according to an embodiment of the disclosure will be described with reference to FIGS. 1 to 7.

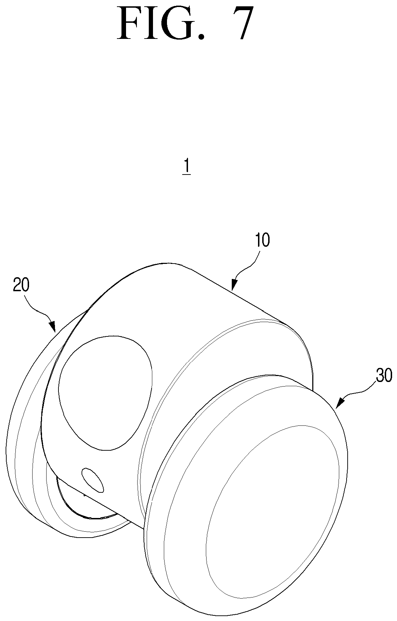

FIG. 7 is a perspective view illustrating a state in which a main body of a mobile projector according to an embodiment of the disclosure is elevated.

The processor 90 may move the mobile projector 1 back, forth, left, and right. The processor 90 may move the mobile projector 1 in all direction on the floor where the mobile projector 1 is located.

The processor 90 may control the left moving part 20 and the right moving part 30 to adjust the moving direction of the mobile projector 1. For example, the processor 90 may control the left moving part 20 and the right moving part 30 to move the mobile projector 1 forward, backward, left and right.

The processor 90 may adjust the direction in which the mobile projector 1 moves by controlling the rotation direction and rotation speed of each of the left wheel motor 21 of the left moving part 20 and the right wheel motor 31 of the right moving part 30.

For example, when the processor 90 controls the left wheel motor 21 and the right wheel motor 31 so that the left wheel 22 and the right wheel 32 rotate in a same first direction at the same speed, the mobile projector 1 may move forward in a straight line. When the processor 90 controls the left wheel motor 21 and the right wheel motor 31 so that the left wheel 22 and the right wheel 32 rotate in a same second direction (opposite of the first direction) at the same speed, the mobile projector 1 may move rearward in a straight line.

When the processor 90 controls the left wheel motor 21 and the right wheel motor 31 to make the rotation direction and rotation speed of each of the left wheel 22 and the right wheel 32 different, the moving direction of the mobile projector 1 may be changed as desired.

For example, when the processor 90 stops the left wheel motor 21 and rotates the right wheel motor 31, the mobile projector 1 may rotate leftward in place. When the processor 90 stops the right wheel motor 31 and rotates the left wheel motor 21, the mobile projector 1 may rotate rightward in place.

When the processor 90 controls the rotation speed of the left wheel motor 21 and the rotation speed of the right wheel motor 31 differently, the mobile projector 1 may rotate to the left or right. The moving direction of the mobile projector 1 may be determined by the difference in the rotation speeds of the left wheel motor 21 and the right wheel motor 31.

In addition, the processor 90 may control the left elevating driver 42 and the right elevating driver 52 to adjust the height of the main body 10. Because the projector 11 is disposed in the main body 10, when the height of the main body 10 is adjusted, the height of the projector 11 may be adjusted.

When the processor 90 rotates the left elevating motor 43 of the left elevating driver 42 and the right elevating motor 53 of the right elevating driver 52 in a same first direction at the same rotation speed, the main body 10 may rise upward with respect to the left wheel 22 and the right wheel 32.

For example, when the processor 90 controls the left elevating motor 43 and the right elevating motor 53 so that the left elevating plate 41 and the right elevating plate 51 rise equally, the main body 10 may rise relative to the left wheel 22 and the right wheel 32 while maintaining the horizontal position with respect to the floor, as illustrated in FIG. 7.

In the state of FIG. 7, when the processor 90 controls the left elevating motor 43 and the right elevating motor 53 to rotate in a same second direction, the left elevating plate 41 and the right elevating plate 51 may be lowered in the same manner, so that the main body 10 may return to its original state as illustrated in FIG. 1.

The processor 90 may control the left elevating driver 42 and the right elevating driver 52 to adjust the height of the main body 10 from the floor and the inclination of the main body 10 with respect to the floor. That is, the processor 90 may control the left elevating driver 42 and the right elevating driver 52 to adjust the height of the projector 11 disposed in the main body 10 from the floor surface and the inclination of the projector 11 with respect to the floor.

For example, when the processor 90 stops the right elevating motor 53 and operates the left elevating motor 43, the right elevating plate 51 is stopped and the left elevating plate 41 may rise or descend. Then, the main body 10 interposed between the left elevating plate 41 and the right elevating plate 51 is tilted with respect to the floor. That is, when the left elevating plate 41 is raised, the upper surface of the main body 10 may be tilted upward to the left with respect to the floor where the mobile projector 1 is positioned. In other words, the projector 11 provided in the main body 10 may be tilted upward to the left with respect to the floor where the mobile projector 1 is positioned.

For example, when the processor 90 stops the left elevating motor 43 and operates the right elevating motor 53, the left elevating plate 41 is stopped and the right elevating plate 51 may rise or descend. Then, the main body 10 interposed between the left elevating plate 41 and the right elevating plate 51 is tilted with respect to the floor. That is, when the right elevating plate 51 is raised, the upper surface of the main body 10 may be tilted upward to the right with respect to the floor where the mobile projector 1 is positioned. In other words, the projector 11 provided in the main body 10 may be tilted upward to the right with respect to the floor where the mobile projector 1 is positioned.

The processor 90 may control the elevation height of the left elevating plate 41 and the elevation height of the right elevating plate 51 within a range where the auxiliary wheel 73 provided on the lower surface of the main body 10 maintains contact with the floor. That is, the processor 90 may control the left elevating motor 43 and the right elevating motor 53 so that the auxiliary wheel 73 does not come off the floor due to the elevation of either the left elevating plate 41 or the right elevating plate 51.

Therefore, the mobile projector 1 according to an embodiment of the disclosure may allow the projector 11 to be tilted relative to the floor and adjust the height of the projector 11 while being stably supported at three points by the left wheel 22, the right wheel 32, and the auxiliary wheel 73.

In the above description, the left pinion 44 is directly connected to the shaft of the left wheel motor 21 and the right pinion 54 is directly connected to the shaft of the right wheel motor 31. In this case, the left wheel motor 21 and the right wheel motor 31 may have a built-in reducer. However, the structures of the left elevating driver 42 and the right elevating driver 52 of embodiments of the disclosure are not limited to this.

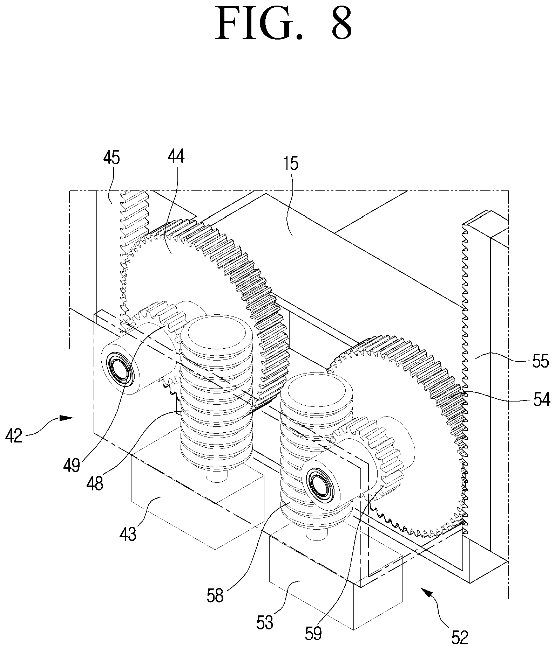

Hereinafter, with reference to FIG. 8, the case in which the left pinion 44 and the right pinion 54 are not directly connected to the left elevating motor 43 and the right elevating motor 53, respectively, will be described.

FIG. 8 is a perspective view illustrating a driving part of a mobile projector according to an embodiment of the disclosure.

Referring to FIG. 8, a left elevating driver 42 may include a left elevating motor 43, a worm 48, a worm wheel 49, and a left pinion 44.

The left elevating motor 43 may be disposed on the base 15. The worm 48 may be disposed on the shaft of the left elevating motor 43. The worm 48 may be disposed to rotate integrally with the shaft of the left elevating motor 43.

The worm 48 may be disposed to mesh with the worm wheel 49. Therefore, when the worm 48 rotates, the worm wheel 49 may rotate. The worm wheel 49 may be disposed on the same shaft as the left pinion 44.

The left pinion 44 may be disposed to mesh with the left rack 45 provided on the left elevating plate 41. Accordingly, when the left pinion 44 rotates, the left elevating plate 41 may move up and down by the left rack 45.

Therefore, when the shaft of the left elevating motor 43 rotates, the worm 48 fixed to the shaft may rotate. When the worm 48 rotates by the left elevating motor 43, the worm wheel 49 meshed with the worm 48 rotates. When the worm wheel 49 rotates, the left pinion 44 disposed on the same shaft as the worm wheel 49 rotates together. When the left pinion 44 rotates, the left elevating plate 41 may move up and down according to the rotation direction of the left pinion 44.

Therefore, when the left elevating motor 43 rotates in one direction, the left elevating plate 41 may rise. When the left elevating motor 43 rotates in the opposite direction, the left elevating plate 41 may descend.

Referring to FIG. 8, a right elevating driver 52 may include a right elevating motor 53, a worm 58, a worm wheel 59, and a right pinion 54. The right elevating driver 52 may be configured with the same structure as the left elevating driver 42 described above. The right elevating driver 52 may be arranged symmetrically with the left elevating driver 42 on the right side of the base 15.

The right elevating motor 53 may be disposed on the right side of the base 15. The worm 58 may be disposed on the shaft of the right elevating motor 53. The worm 48 may be disposed to rotate integrally with the shaft of the right elevating motor 53.

The worm 58 may be disposed to mesh with the worm wheel 59. Therefore, when the worm 58 rotates, the worm wheel 59 may rotate. The worm wheel 59 may be disposed on the same shaft as the right pinion 54.

The right pinion 54 may be disposed to mesh with the right rack 55 provided on the right elevating plate 51. Accordingly, when the right pinion 54 rotates, the right elevating plate 51 may move up and down by the right rack 55.

Therefore, when the shaft of the right elevating motor 53 rotates, the worm 58 fixed to the shaft may rotate. When the worm 58 rotates by the right elevating motor 53, the worm wheel 59 meshed with the worm 58 rotates. When the worm wheel 59 rotates, the right pinion 54 disposed on the same shaft as the worm wheel 59 rotates together. When the right pinion 54 rotates, the right elevating plate 51 may move up and down according to the rotation direction of the right pinion 54.

Therefore, when the right elevating motor 53 rotates in one direction, the right elevating plate 51 may rise. When the right elevating motor 53 rotates in the opposite direction, the right elevating plate 51 may descend.

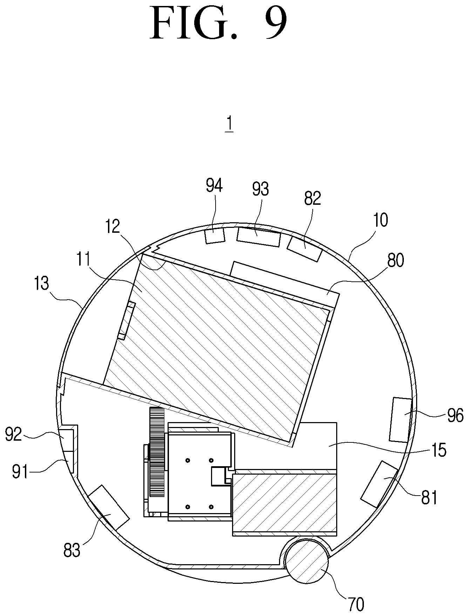

FIG. 9 is a view illustrating the arrangement of internal components of a mobile projector according to an embodiment of the disclosure.

Referring to FIG. 9, the main body 10 forms the outer appearance of the mobile projector 1, and the projector 11 and the drive device may be disposed inside the main body 10. The main body 10 may be formed in a substantially hollow cylindrical shape.

The projector accommodating portion 12 may be provided inside the main body 10. The projector accommodating portion 12 may be formed so that the projector 11 is detachably disposed therein. The projector accommodating portion 12 may be formed in a shape corresponding to the projector 11. The projector accommodating portion 12 may be formed so as to selectively fix the projector 11.

The projector cover 13 is provided at the entrance of the projector accommodating portion 12. The projector cover 13 may form a portion of the outer surface of the main body 10. When the projector 11 is inserted into the projector accommodating portion 12, an image may be projected through the projector cover 13.

In addition, the base 15 may be provided inside the main body 10. The base 15 may be disposed in the main body 10 below the projector accommodating portion 12.

The left elevating part 40 and the right elevating part 50 may be disposed on the left and right sides of the base 15, respectively. The left elevating part 40 and the right elevating part 50 may be disposed symmetrically with respect to the base 15.

A power supply may be provided in the main body 10. For example, the power supply may be disposed in the base 15. The power supply may be formed of a battery. For example, the power supply may be formed of a rechargeable battery.

At least one sensor may be disposed on the outer surface of the main body 10. The at least one sensor may include a distance sensor 91 and an image sensor 92.

A time of flight (TOF) sensor and a red, green, blue, and depth (RGBD) sensor may be used as the distance sensor 91. In addition, any sensor may be used as the distance sensor 91 as long as it can measure the distance to an object located in front.

A camera may be used as the image sensor 92. The camera 92 may capture images of surrounding objects. The camera 92 may capture images of the projection surface on which the projector 11 projects images.

A direction sensor 93 may be disposed in the main body 10. The direction sensor 93 may detect the direction of the mobile projector 1, that is, the direction of the main body 10. Because the projector 11 is fixed to the main body 10, when the direction of the main body 10 is identified, the direction of the projector 11 may be identified. Therefore, the direction of the projector 11 may be detected through the direction sensor 93. An acceleration sensor, a gyro sensor, a geomagnetic sensor, etc. may be used as the direction sensor 93.

For example, an inertial measurement unit (IMU) including an acceleration sensor, a gyro sensor, and a geomagnetic sensor may be disposed in the main body 10.

An illuminance sensor 94 capable of detecting the surrounding illuminance may be provided in the main body 10.

A power switch 96 capable of turning the mobile projector 1 on/off may be provided on the outer surface of the main body 10.

The main body 10 may be provided with a speaker 81 and at least one microphone 82. The speaker 81 and the at least one microphone 82 may be disposed inside the main body 10 adjacent to the outer surface of the main body 10.

The at least one microphone 82 may be a directional microphone. The at least one microphone 82 may be used for user voice recognition.

A fan 83 may be provided in the main body 10. The fan 83 may be used to cool the inside of the main body 10.

The main body 10 may be provided with a communication part 97 capable of communicating with a peripheral device. The communication part 97 may include Bluetooth, WiFi, 4G, 5G, etc.

The mobile projector 1 may communicate with portable devices such as smartphones, tablets, and laptop computers through the communication part 97. The mobile projector 1 may receive commands from a user through the communication part 97. The mobile projector 1 may transmit status information of the mobile projector 1 to the user through the communication part 97.

At least one printed circuit board 80 may be disposed inside the main body 10. The at least one printed circuit board 80 may include sensor circuitry configured to control the above-described sensors, elevation circuitry configured to control the left elevating driver 42 and the right elevating driver 52, movement circuitry configured to control the left moving part 20 and the right moving part 30, projector circuitry configured to control the projector 11, power circuitry configured to control the power supply 98, communication circuitry configured to control the communication part 97, and interface circuitry configured to control an user interface 87 and an input/output interface 88.

The processor 90 may be disposed on the at least one printed circuit board 80. The processor 90 may be configured to individually control the left moving part 20, the right moving part 30, the left elevating part 40, and the right elevating part 50. The processor 90 may be configured to control the image sensor 92, the distance sensor 91, the direction sensor 93, and the illuminance sensor 94.

The processor 90 may control the left moving part 20, the right moving part 30, the left elevating part 40, and the right elevating part 50 based on signals input to the processor 90 from at least one sensor to adjust the position and height of the mobile projector 1.

The processor 90 may control the left moving part 20, the right moving part 30, the left elevating part 40, and the right elevating part 50 using signals input from at least one sensor to adjust the size, position, height, and horizontality of the image projected by the projector 11.

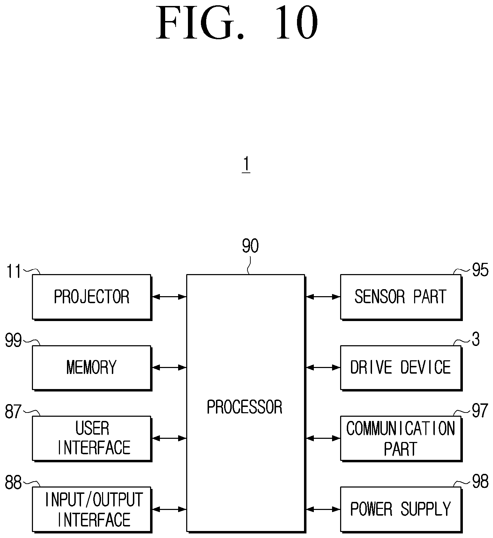

FIG. 10 is a functional block diagram of a mobile projector according to an embodiment of the disclosure.

Referring to FIG. 10, the mobile projector 1 according to an embodiment of the disclosure may include a projector 11, memory 99, a user interface 87, an input/output interface 88, a sensor part 95, a drive device 3, a communication part 97, a power supply 98, and a processor 90.

The projector 11 may be configured to project an image toward a screen or a wall. The projector 11 may include an optical system such as a light source, a lens, and the like. The projector 11 may be disposed in the projector accommodating portion 12 of the main body 10.

The memory 99 may store various software for controlling the mobile projector 1, such as driving software for controlling the drive device 3. The memory 99 may store various data for controlling the mobile projector 1, such as sensing information detected by the sensor part 95.

The user interface 87 is provided so that the user may control the mobile projector 1. The user interface 87 may include an input interface through which the user inputs a command to the mobile projector 1 and an output interface through which the mobile projector 1 outputs the status of the mobile projector 1.

The input interface may include a plurality of buttons, a microphone 82, etc. provided in the main body 10. The user may control the mobile projector 1 by voice using the microphone 82.

The output interface may include a display, a speaker 81, etc. provided in the main body 10. The mobile projector 1 may output the status of the mobile projector 1 on the display. Or, the mobile projector 1 may output the status of the mobile projector 1 as sound through the speaker 81.

The input/output interface 88 may be configured so as to input and output audio data and image data between the mobile projector 1 and an external device. For example, audio data and image data may be stored in the memory 99 of the mobile projector 1 from an external device through the input/output interface 88.

The sensor part 95 may be provided so that the mobile projector 1 may recognize the surrounding environment. That is, the mobile projector 1 may recognize the external environment through the sensor part 95.

For example, as illustrated in FIG. 9, the sensor part 95 may include a distance sensor 91 configured to detect the distance from the mobile projector 1 to an object, a camera 92 configured to capture an image of the object and recognize the object, a direction sensor 93 configured to detect the moving direction of the mobile projector 1, an illuminance sensor 94 configured to detect the illuminance of the surroundings, etc.

The drive device 3 may be configured to drive the mobile projector 1. The drive device 3 may include a left moving part 20 and a right moving part 30 that move the mobile projector 1 forward, backward, left, and right, and a left elevating driver 42 and a right elevating driver 52 that adjust the height and inclination of the mobile projector 1.

The communication part 97 may be configured to communicate with an external device outside the mobile projector 1. The communication part 97 may include Bluetooth, WiFi, 4G, 5G, etc. The communication part 97 may include a remote control receiver that receives a signal from a remote control.

The power supply 98 may be configured to supply power required for the operation of the mobile projector 1. The power supply 98 may be formed as a battery. For example, the power supply 98 may be formed as a rechargeable battery that can be charged using a commercial power source.

The processor 90 may be configured to control the projector 11, the memory 99, the user interface 87, the input/output interface 88, the sensor part 95, the drive device 3, the communication part 97, and the power supply 98. The processor 90 may be configured to partially or entirely control the projector 11, the memory 99, the user interface 87, the input/output interface 88, the sensor part 95, the drive device 3, the communication part 97, and the power supply 98.

In the above description, wheels are used as the left moving part 20 and the right moving part 30. However, the mobile projector 1 of embodiments of the disclosure is not limited thereto. As another example, the left moving part 20 and the right moving part 30 may be implemented as a caterpillar.

The mobile projector 1 according to an embodiment of the disclosure having the structure as described above may automatically find a projection surface and notify the user of it according to a user's command. Thereafter, the mobile projector 1 may project an image on the projection surface according to the user's selection. Here, the projection surface refers to a flat surface on which the mobile projector 1 can project an image. In other words, the projection surface refers to a surface that may be used as a screen for the mobile projector 1.

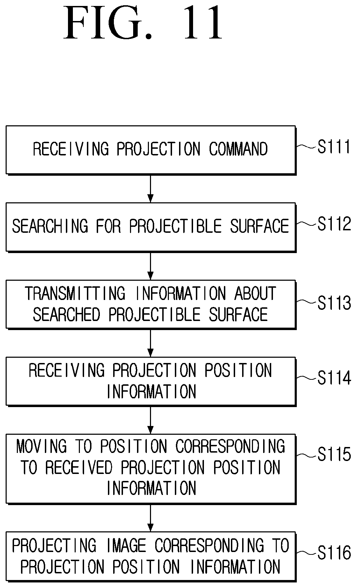

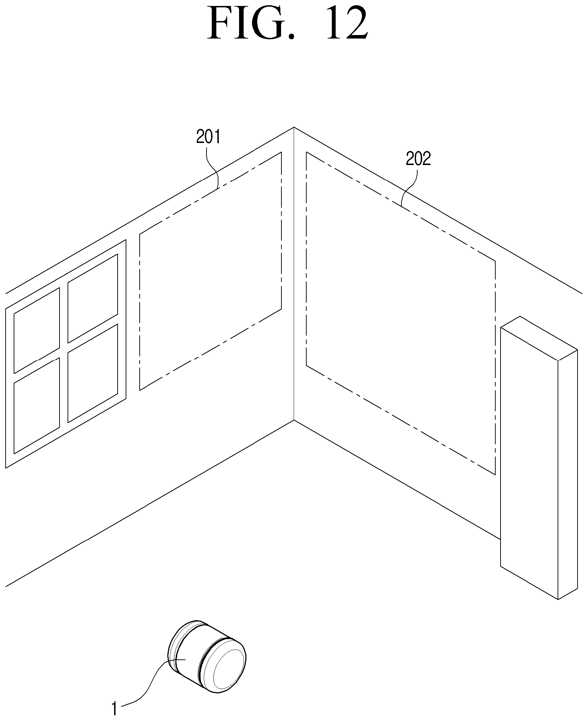

Hereinafter, an image projection method of a mobile projector 1 according to an embodiment of the disclosure will be described with reference to FIGS. 11 and 12.

FIG. 11 is a flowchart for explaining an image projection method of a mobile projector according to an embodiment of the disclosure. FIG. 12 is a view conceptually illustrating a space where a mobile projector is located according to an embodiment of the disclosure. For reference, FIG. 12 illustrates only two walls in a room having four walls for convenience of illustration.

First, the mobile projector 1 is connected to a remote control 110.

The connection between the mobile projector 1 and the remote control 110 may be performed by a user's command. That is, the user may connect the remote control 110 and the mobile projector 1 by operating the remote control 110. The remote control 110 and the mobile projector 1 may be connected to each other through a wireless network. For example, the remote control 110 and the mobile projector 1 may be connected to each other through Bluetooth, WiFi, etc.

Here, the remote control 110 refers to as a separate device configured to control the mobile projector 1. For example, the remote control 110 may be a dedicated remote control for a mobile projector configured to control the mobile projector 1.

Or, the remote control 110 may be implemented as a portable electronic device such as a smartphone, tablet computer, laptop computer, or the like. In this case, an application capable of controlling the mobile projector 1 may be installed in the portable electronic device.

The remote control 110 may be configured to control the power on/off of the mobile projector 1, the moving direction of the mobile projector 1, and the on/off of the projector 11.

The remote control 110 may include a display 111. The display 111 may display commands for controlling the mobile projector 1, information transmitted from the mobile projector 1, and the like. The display 111 may include a touch screen. Accordingly, the user may select a command by touching a menu displayed on the display 111.

When the remote control 110 is connected to the mobile projector 1, the user transmits a projection command to the mobile projector 1 using the remote control 110.

The mobile projector 1 receives the projection command (S111). The projection command may be transmitted from the remote control 110. That is, the processor 90 of the mobile projector 1 may receive the projection command transmitted from the remote control 110 through the communication part 97. The projection command is a command that causes the mobile projector 1 to search the surroundings to find at least one projectable surface that may be used as a screen, and to transmit information about at least one projectable surface found.

When receiving the projection command, the processor 90 searches for a projectable surface while moving the mobile projector 1 (S112). For example, the processor 90 may search for a projectable surface using a sensor while moving the mobile projector 1 forward, backward, left, and right by controlling the left moving part 20 and the right moving part 30. Alternatively, the processor 90 may search for a projectable surface using a sensor while rotating the mobile projector 1 360 degrees in place by controlling the left moving part 20 and the right moving part 30.

The processor 90 may find a suitable projectable surface for projection using a TOF sensor and a camera. Here, the projectable surface refers to a flat surface suitable for projecting an image using the projector 11. The flat surface may include, for example, a wall, a surface of furniture, a screen, etc.

The processor 90 may recognize the distance to the projectable surface and the area and the maximum height of the projectable surface using the TOF sensor and the camera.

The processor 90 may search for at least one projectable surface. For example, the processor 90 may search for one projectable surface. Or, the processor 90 may search for two or more projectable surfaces.

For example, as illustrated in FIG. 12, the processor 90 of the mobile projector 1 may find a first projectable surface 201 and a second projectable surface 202 on two walls.

The processor 90 may transmit information about the searched projectable surface (S113). The processor 90 may store information about at least one searched projectable surface as projectable surface information in the memory 99 and transmit it the outside through the communication part 97. The projectable surface information may include the position of at least one projectable surface and the maximum height and maximum size of an image that may be projected on the projectable surface.

For example, in FIG. 12, the processor 90 may store and transmit the position, height, and size of the first projectable surface 201 and the position, height, and size of the second projectable surface 202 as the projectable surface information.

The remote control 110 may receive the projectable surface information transmitted from the mobile projector 1. The remote control 110 may display the projectable surface information transmitted from the mobile projector 1 on the display 111.

The user selects a desired projectable surface from the projectable surface information displayed on the display 111. For example, when the projectable surface information includes multiple projectable surfaces, the user may select one of the multiple projectable surfaces. That is, the user may select a desired projectable surface by considering the position of the projectable surface and the height and size of the image that can be projected on the projectable surface. For example, in the case of FIG. 12, the user may select the second projectable surface 202 among the two projectable surfaces 201 and 202 included in the projectable surface information.

When the user selects one projectable surface, the remote control 110 transmits projection position information. The projection position information may include the position of the projectable surface selected by the user.

The processor 90 of the mobile projector 1 may receive the projection position information (S114). The processor 90 may receive projection position information including the projection position transmitted from an external device such as the remote control 110. The processor 90 may recognize the projectable surface on which to project an image from the received projection position information.

The projection position information may include the projectable surface selected by the user from the projectable surface information transmitted from the mobile projector 1. For example, when the projectable surface information includes multiple projectable surfaces, the projection position information includes information on one projectable surface selected from among them. For example, the projection position information may include information on the second projectable surface 202 of FIG. 12.

The processor 90 moves the mobile projector 1 to a position corresponding to the received projection position information (S115). For example, the processor 90 may control the left moving part 20 and the right moving part 30 to move the mobile projector 1 to a position corresponding to the projectable surface included in the projection position information. Here, the position corresponding to the projectable surface refers to a position where the front of the projector 11 of the mobile projector 1 faces the projectable surface and the projector 11 may optimally project an image on the projectable surface.

Finally, the processor 90 projects an image based on the projection position information (S116). That is, the processor 90 controls the projector 11 to project an image on the selected projectable surface (hereinafter referred to as a projection surface).

The mobile projector 1 may control at least one from among the left moving part 20, the right moving part 30, the left elevating driver 42, and the right elevating driver 52 to adjust at least one from among the size, position, height, and horizontality of the projection image.

For example, the processor 90 may control the left moving part 20 and the right moving part 30 to move the mobile projector 1 forward, backward, left, and right to adjust the size and horizontal position of the projection image projected on the projection surface.

In addition, the processor 90 may control the left elevating driver 42 and the right elevating driver 52 to raise the main body 10 to adjust the height of the projection image projected on the projection surface.

In addition, the processor 90 may control the left moving part 20, the right moving part 30, the left elevating driver 42, and the right elevating driver 52 to adjust the horizontality of the image projected on the projection surface and correct the distortion of the image.

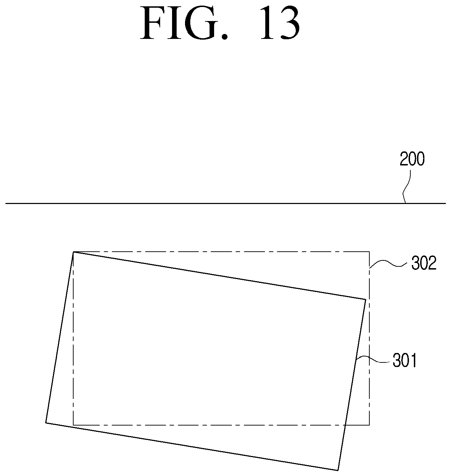

FIG. 13 is a view for explaining a method of adjusting the horizontality of a projection image. For reference, in FIG. 13, the solid line 301 represents the image projected by the mobile projector 1, and the virtual line 302 represents the state in which the horizontality of the image projected by the mobile projector 1 is adjusted.

As illustrated by the solid line 301 in FIG. 13, the image projected by the mobile projector 1 is a rectangular shape, but is tilted at a certain angle with respect to the ceiling 200 or the floor.

In this case, the processor 90 may recognize that the image projected by the mobile projector 1 is tilted using the camera 92. Then, the processor 90 may control the left elevating driver 42 and the right elevating driver 52 to adjust the horizontality of the projected image. That is, the processor 90 may control the left elevating driver 42 and the right elevating driver 52 to make the projection image parallel to the ceiling 200 or the floor.

For example, as illustrated by the solid line 301 in FIG. 13, when the image projected by the mobile projector 1 is inclined downward from the left to the right with respect to the ceiling 200, the processor 90 controls the left elevating motor 43 to raise the left elevating plate 41 to a certain height. At this time, the processor 90 may recognize the tilted angle of the projection image form the image of the projection image captured by the camera 92 and calculate the elevation height of the left elevating plate 41 required to make the projection image horizontal.

When the right elevating plate 51 is stationary and the left elevating plate 41 is raised to a certain height, the main body 10 is inclined at a certain angle with respect to the floor, so that the image projected by the mobile projector 1 may be parallel to the ceiling 200, as shown by the virtual line 302 in FIG. 13.

In the case where the projection image is inclined in the opposite direction to the solid line 301 of FIG. 13, the processor 90 does not operate the left elevating motor 43, but operates the right elevating motor 53 to raise the right elevating plate 51. Then, the main body 10 is inclined at a certain angle with respect to the floor, so that the projection image may be parallel to the ceiling 200.

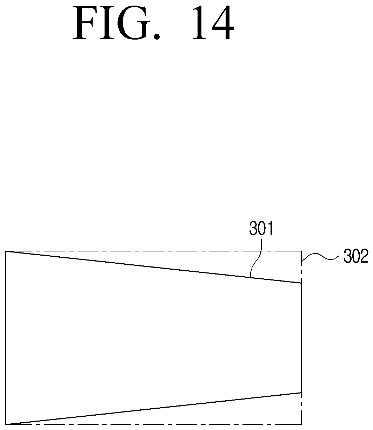

FIG. 14 is a view for explaining a method of correcting a distorted projection image. For reference, in FIG. 14, a solid line 301 represents an image projected by the mobile projector 1, and a virtual line 302 represents a state in which the distortion of an image projected by the mobile projector 1 is corrected.

As shown by the solid line 301 in FIG. 14, an image projected by the mobile projector 1 may be an isosceles trapezoid.

In this case, the processor 90 may recognize that the image projected by the mobile projector 1 is not a rectangular shape but an isosceles trapezoidal shape using the camera 92. Then, the processor 90 may control the left moving part 20 and the right moving part 30 to make the projected image a rectangular shape.

For example, as shown by the solid line 301 in FIG. 14, in the case of an isosceles trapezoidal shape in which the left side of the projection image is long and the right side is short, the processor 90 controls the right wheel motor 31 of the right moving part 30 to rotate the mobile projector 1 to the right by a certain angle. At this time, the processor 90 may recognize the difference in length between the left and right sides of the projection image from the image of the projection image captured by the camera 92, and calculate the rotational angle of the mobile projector 1 necessary to make the projection image into a rectangular shape.

When the left wheel 22 is stationary and the right wheel 32 is rotated at a certain angle, the mobile projector 1 rotates at a certain angle to the left, so that the image projected by the mobile projector 1 may become a rectangular shape, as shown by the virtual line 302 in FIG. 14.

In the case where the projection image is an isosceles trapezoid shape opposite to the solid line 301 of FIG. 14, the processor 90 does not operate the right wheel motor 31 and operates the left wheel motor 21 to rotate the left wheel 22. Then, the mobile projector 1 rotates at a certain angle to the right, so that the projection image may become a rectangular shape.

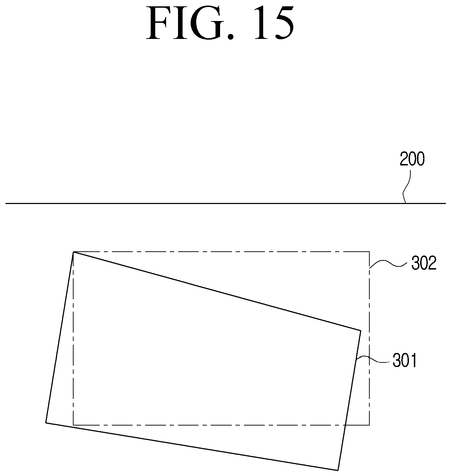

FIG. 15 is a view for explaining a method of correcting a distorted projection image. For reference, in FIG. 15, a solid line 301 represents an image projected by the mobile projector 1, and a virtual line 302 represents a state in which the distortion of an image projected by the mobile projector 1 is corrected.

As shown by the solid line 301 in FIG. 15, the image projected by the mobile projector 1 has an isosceles trapezoidal shape, and the side of the projection image may be inclined rather than perpendicular to the ceiling 200. In other words, the distortion of the projection image may appear as a mixed form of the distortion of FIG. 13 and the distortion of FIG. 14 described above.

In this case, the processor 90 may recognize that the image projected by the mobile projector 1 is an isosceles trapezoidal shape and the side of the projection image is inclined with respect to the ceiling 200 using the camera 92. Then, the processor 90 may control the left moving part 20, the right moving part 30, the left elevating driver 42, and the right elevating driver 52 so that the projected image becomes a rectangular shape and is parallel to the ceiling 200, as represented by the virtual line 302.

That is, the processor 90 may control the left wheel motor 21, the right wheel motor 31, the left elevating motor 43, and the right elevating motor 53 to simultaneously perform the horizontal adjustment of FIG. 13 and the distortion correction of FIG. 14.

The mobile projector 1 according to an embodiment of the disclosure may project simple information or ambient graphics using the surrounding space while being charged.

For example, when the mobile projector 1 is in charging mode, the processor 90 may find a projectable surface from the surroundings using the distance sensor 91 and the camera 92. Then, the processor 90 may project an image showing simple information, such as a clock or weather, on the projectable surface. Such simple information may be stored in the memory 99 of the mobile projector 1 and may be selected by the user.

In addition, in the charging mode, the processor 90 may project ambient graphics on the projectable surface. The ambient graphics may be stored in the memory 99 of the mobile projector 1 and may be selected by the user.

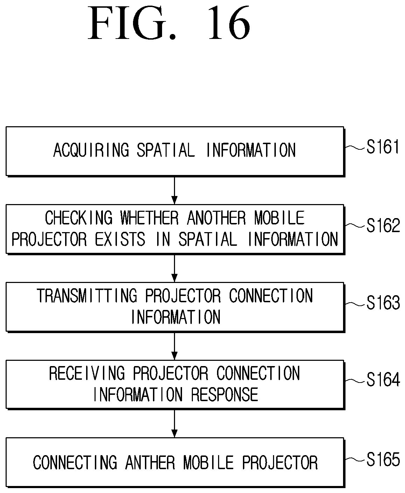

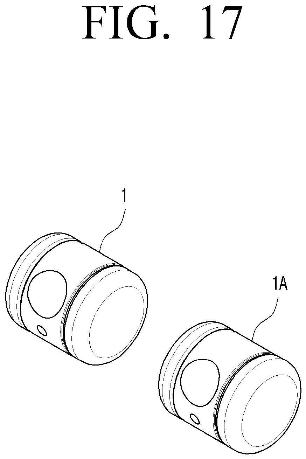

The mobile projector 1 according to an embodiment of the disclosure may be used to form a projection system. Hereinafter, a method of forming a projection system using the mobile projector 1 according to an embodiment of the disclosure will be described with reference to FIGS. 16 and 17.

FIG. 16 is a flowchart for explaining a method of forming a projection system with a mobile projector according to an embodiment of the disclosure. FIG. 17 is a view illustrating a state in which two mobile projectors constitute a projection system according to an embodiment of the disclosure.

First, a plurality of mobile projectors 1 may obtain surrounding spatial information (S161). For example, in the case illustrated in FIG. 16, two mobile projectors 1 may obtain surrounding spatial information. That is, the processor 90 of each of the two mobile projectors 1 may obtain surrounding spatial information by using the distance sensor 91, the camera 92, etc. provided in the main body 10.

Among the plurality of mobile projectors, a host mobile projector 1 may check whether there is another mobile projector 1A around it from the acquired spatial information (S162). That is, the processor 90 of the host mobile projector 1 may check whether there is another mobile projector 1A around it, that is, within the range that the host mobile projector 1 may recognize. The host mobile projector 1 may recognize another mobile projector 1A as a client mobile projector 1A.

Here, the host mobile projector 1 may be a mobile projector 1 randomly set by the user among the plurality of mobile projectors 1 and 1A. Hereinafter, for convenience of explanation, the host mobile projector 1 is referred to as a host, and the client mobile projector 1A is referred to as a client.

When another mobile projector 1A exists, the host 1 may transmit projector connection information (S163). The projector connection information is information for notifying the user that there is a connectable client 1A around and confirming whether to connect the client 1A.

The user may check the projector connection information transmitted by the host 1 through the remote control 110. For example, when the remote control 110 receives the projector connection information transmitted from the host 1, the remote control 110 displays the projector connection information on the display 111 of the remote control 110. The user may view the projector connection information displayed on the remote control 110 and determine whether to connect the client 1A or not. When the user selects whether to connect the client 1A, the remote control 110 may transmit a projector connection information response.

When the user selects the connection of the client 1A, the remote control 110 transmits a projection position information response including a command for client connection.

The host 1 may receive a response regarding the projector connection information (S164). That is, the host 1 may receive the projector connection information response including whether the client 1A is connected transmitted from the remote control 110.

When the received projector connection information response indicates that there is to be the connection, the host mobile projector 1 may connect another mobile projector 1A, that is, the client (S165). When the host mobile projector 1 connects the client mobile projector 1A, a projection system using the mobile projector 1 according to an embodiment of the disclosure may be formed.

At this time, the host 1 may recognize the location of the client 1A based on the spatial information acquired by the host 1 and the spatial information acquired by the client 1A.

Using this spatial information, the host 1 and the client 1A may project one image. That is, two mobile projectors 1 may project divided images to form one image on the projection surface. One image may be formed by connecting two divided images.

When the projector connection information response indicates that there is not to be the connection, the mobile projector 1 does not connect another mobile projector 1A.

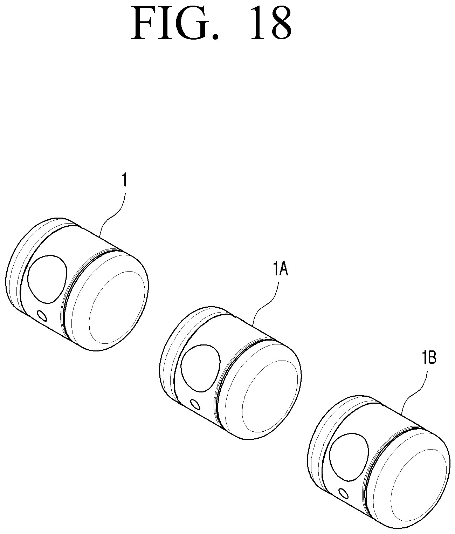

Still, another mobile projector 1B may be added to the projection system including two mobile projectors 1 and 1A as illustrated in FIG. 17. In this case, as illustrated in FIG. 18, three mobile projectors 1, 1A, and 1B may form the projection system.

FIG. 18 is a view illustrating a state in which three mobile projectors constitute a projection system according to an embodiment of the disclosure.

In this case, the host 1 may add another mobile projector 1B as a second client similar to the method of forming a projection system described with reference to FIG. 16.

First, the plurality of mobile projectors 1, 1A, and 1B may obtain spatial information of the surroundings. For example, in the case illustrated in FIG. 18, three mobile projectors 1, 1A, and 1B may obtain spatial information of the surroundings. That is, the processor 90 of each of the three mobile projectors 1, 1A, and 1B may obtain spatial information of the surroundings by using the distance sensor, the camera, etc. provided in the main body 10.

The host mobile projector 1 may check whether there is another mobile projector 1B around it from the acquired spatial information. The host 1 may check whether there is another mobile projector 1B in addition to the already connected client 1A. The host mobile projector 1 may recognize still another mobile projector 1B as another client mobile projector 1B.

When another client 1B exists, the host 1 may transmit projector connection information. The projector connection information is information to inform the user that there is another client 1B around that may connect, and to confirm whether to connect another client 1B.

The user may check the projector connection information transmitted by the host 1 through the remote control 110. For example, when the remote control 110 receives the projector connection information transmitted from the host 1, the remote control 110 displays the projector connection information on the display 111 of the remote control 110. The user may view the projector connection information displayed on the remote control 110 and allow or not allow another client 1B to connect. When the user selects whether to connect another client 1B, the remote control 110 may transmit a projector connection information response.

When the user selects the connection of another client 1B, the remote control 110 transmits a projector connection information response including a command for client connection.

The host 1 may receive a response regarding the projector connection information. That is, the host 1 may receive the projector connection information response including whether the client is connected or not transmitted from the remote control 110.

When the received projector connection information response indicates that there is to be the connection, the host mobile projector 1 may connect another mobile projector 1B. When the host mobile projector 1 connects another client mobile projector 1B, a projection system including three mobile projectors 1, 1A, and 1B according to an embodiment of the disclosure may be formed.

At this time, the host 1 may recognize the locations of the two clients 1A and 1B based on the spatial information acquired by the host 1 and the spatial information acquired by the two clients 1A and 1B.

Using this spatial information, the host 1 and the two clients 1A and 1B may project one image together. That is, three mobile projectors 1, 1A, and 1B may project divided images to form one image on the projection surface. One image may be formed by connecting three divided images.

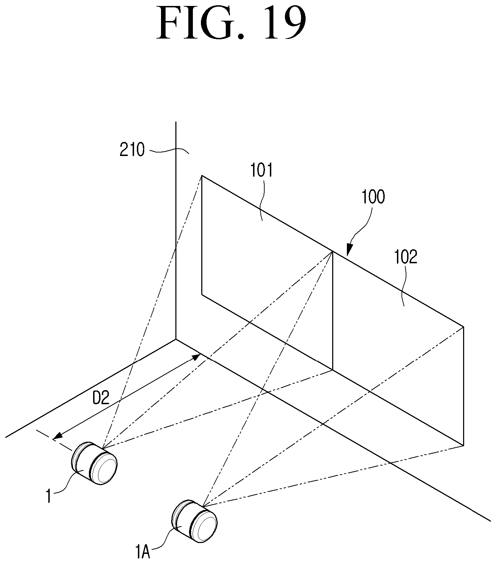

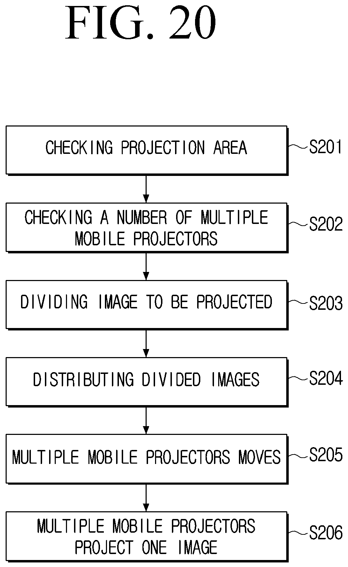

Two mobile projectors 1 and 1A that constitute the projection system may project one image. Hereinafter, this will be described with reference to FIGS. 19 and 20.

FIG. 19 is a view illustrating a state in which two mobile projectors project one image according to an embodiment of the disclosure. FIG. 20 is a flowchart for explaining a method of projecting one image by two mobile projectors according to an embodiment of the disclosure.

Referring to FIG. 19, each of two mobile projectors 1 and 1A projects a respective image 101 and 102 corresponding to half of a complete image 100. When each of the two mobile projectors 1 and 1A projects a half image 101 and 102 on a projection surface 210, the two half images 101 and 102 may be connected to form one complete image 100.

Referring to FIG. 20, among the plurality of mobile projectors 1 and 1A, the host mobile projector 1 checks the projection area (S201). The projection area refers to an appropriate projection surface 210 on which the host 1 and the client 1A may project one image together.

Next, the number of pluralities of mobile projectors 1 and 1A is checked (S202). For example, the processor 90 of the host 1 may check the number of multiple mobile projectors 1 and 1A including itself and multiple clients 1A. At this time, the host 1 may receive the spatial information acquired by the multiple clients 1A and recognize the locations of the multiple clients 1A.

In the case of FIG. 19, the number of multiple mobile projectors 1 and 1A is two. That is, the plurality of mobile projectors may include a host mobile projector 1 and a client mobile projector 1A. At this time, the processor 90 of the host 1 may recognize the positions of the host mobile projector 1 and the client mobile projector 1A through the spatial information.

Next, the processor 90 of the host 1 divides an image to be projected (S203). That is, the processor 90 of the host 1 divides one image to be projected into multiple images corresponding to the number of the multiple mobile projectors 1 and 1A. For example, in the case where there are two mobile projectors 1 and 1A as illustrated in FIG. 19, the processor 90 of the host 1 divides one image into two images.

The host 1 distributes the divided images to multiple mobile projectors 1 and 1A (S204). At this time, the host 1 may distribute an appropriate divided image to each of the multiple mobile projectors 1 and 1A based on the locations of the multiple mobile projectors 1 and 1A.

For example, when there is the host 1 and one client 1A as illustrated in FIG. 19, the host 1 transmits to the client 1A a divided image appropriate for projection by the client 1A based on its own position and the position of the client 1A. The host 1 may store the divided image it will project.

The multiple mobile projectors 1 and 1A move to appropriate positions for projecting the divided images (S205). That is, each of the multiple mobile projectors 1 and 1A automatically moves to an appropriate position for projecting the divided image using the left moving part 20 and the right moving part 30. In addition, each of the multiple mobile projectors 1 and 1A may automatically position the projector 11 thereof at an appropriate height for projecting the divided image using the left elevating driver 42 and the right elevating driver 52 thereof. At this time, each of the multiple mobile projectors 1 and 1A may move to an appropriate position and position the projector 11 thereof at an appropriate height using built-in distance sensor, camera, etc.

Finally, the multiple mobile projectors 1 and 1A project the divided images to form one complete image 100 on the projection surface 210 (S206).

For example, in the case of FIG. 19, the host 1 may project the half image 101 and the client 1A may project the half image 102 to form one complete image 100.

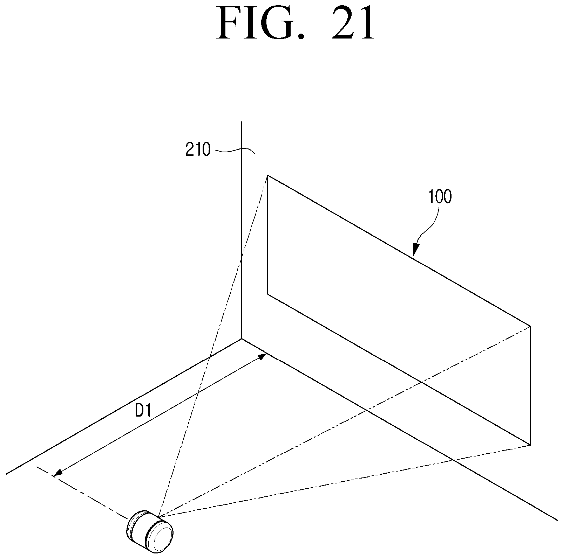

According to an embodiment of the disclosure, a mobile projector 1 may be configured such that when one mobile projector 1 is projecting an image, another mobile projector 1A is added so that two mobile projectors 1 and 1A project one image. This will be described below with reference to FIGS. 21 to 23.

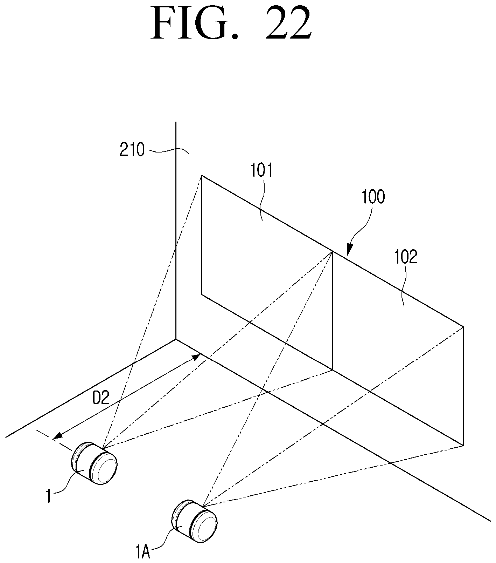

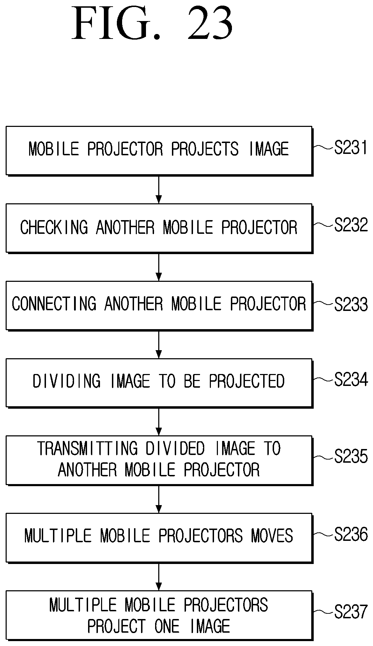

FIG. 21 is a view illustrating a state in which one mobile projector projects an image according to an embodiment of the disclosure. FIG. 22 is a view illustrating a state in which another mobile projector is added in the state of FIG. 21 so that two mobile projectors project one image. FIG. 23 is a flowchart for explaining a method of two mobile projectors projecting one image when another mobile projector is added in the state of FIG. 21.

As illustrated in FIG. 21, one mobile projector 1 may project a complete image 100 on the projection surface 210. At this time, the mobile projector 1 is spaced apart from the projection surface 210 by a certain distance D1 depending on the size of the projection image 100.

In this state, another mobile projector 1A may be added. That is, another mobile projector 1A may be positioned adjacent to the mobile projector 1 that is projecting an image. At this time, as illustrated in FIG. 22, the two mobile projectors 1 and 1A, that is, the existing mobile projector 1 and the added mobile projector 1A, may project an image of the same size as the projection image 100 that the existing mobile projector 1 was projecting.

Referring to FIG. 23, the mobile projector 1 projects an image on the projection surface 210 (S231). At this time, the mobile projector 1 is spaced apart from the projection surface 210 by a certain distance D1.

While the mobile projector 1 is projecting an image, the mobile projector 1 may check whether another mobile projector 1A exists around it (S232).

When there is another mobile projector 1A around, the mobile projector 1 may form a projection system by connecting another mobile projector 1A (S233). For example, the mobile projector 1 may connect another mobile projector 1A using the method of forming a projection system of FIG. 16 described above. At this time, the mobile projector 1 may recognize itself as a host 1 and recognize another mobile projector 1A as a client.

The mobile projector 1 may divide an image to be projected into two images (S234).

The mobile projector 1 may transmit one of the two divided images to another mobile projector 1A. At this time, the mobile projector 1 transmits the divided image suitable for the location of another mobile projector 1A (S235).

The mobile projector 1 and another mobile projector 1A each move to a location appropriate for the divided image (S236). Because the divided images 101 and 102 are smaller than the complete image 100, the two mobile projectors 1 and 1A may move closer to the projection surface 210.

For example, in the case where two mobile projectors 1 and 1A project divided images 101 and 102, respectively, as illustrated in FIGS. 22, the distance D2 between the mobile projectors 1 and 1A and the projection surface 210 may be reduced compared to the distance D1 between the mobile projector 1 and the projection surface 210 when one mobile projector 1 projects the entire image as illustrated in FIG. 21.

Finally, the two mobile projectors 1 and 1A may respectively project the divided images 101 and 102 to form one image on the projection surface (S237).

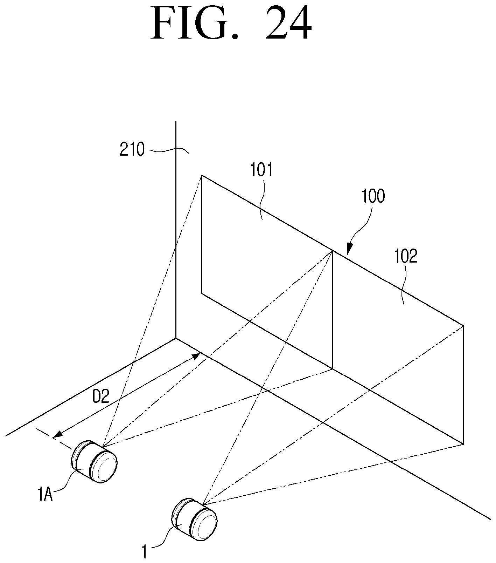

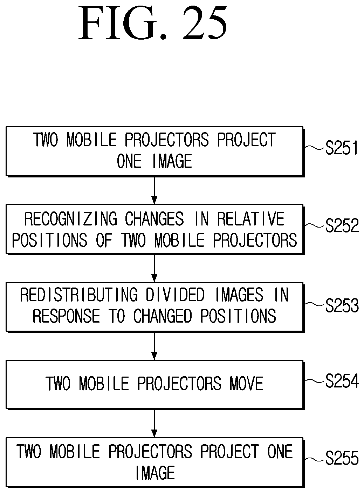

As illustrated in FIG. 19, when the two divided images 101 and 102 projected by the two mobile projectors 1 and 1A form one full image 100, the relative positions of the two mobile projectors 1 and 1A may change. That is, the positions of the host mobile projector 1 and the client mobile projector 1A may be switched with each other. This case will be described with reference to FIGS. 24 and 25.

FIG. 24 is a view illustrating a state in which two mobile projectors project one image in a state in which the relative positions of the two mobile projectors are changed in the state of FIG. 19.

Referring to FIG. 19, two mobile projectors 1 and 1A, that is, the host mobile projector 1 and the client mobile projector 1A, each project divided images 101 and 102 to form one complete image 100. At this time, the host mobile projector 1 is located on the left, and the client mobile projector 1A is located on the right.

In FIG. 19, the positions of the two mobile projectors 1 and 1A may be changed. That is, the host mobile projector 1 may be located on the right, and the client mobile projector 1A may be located on the left. This state is illustrated in FIG. 24.

Referring to FIG. 24, the host mobile projector 1 is located on the right, and the client mobile projector 1A is located on the left. The host mobile projector 1 and the client mobile projector 1A each project divided images 101 and 102 to form a complete image 100 having the same size and aspect ratio as in FIG. 19.

Hereinafter, with reference to FIG. 25, a method of projecting one image 100 by two mobile projectors 1 and 1A when the relative positions of the two mobile projectors 1 and 1A are changed will be described.

FIG. 25 is a flowchart for explaining a method of two mobile projectors projecting one image when the relative positions of the two mobile projectors are changed in the state of FIG. 19.

Two mobile projectors 1 and 1A project one image on the projection surface 210 (S251). For example, as illustrated in FIG. 19, two mobile projectors 1 and 1A each project divided images 101 and 102 to form one complete image 100. At this time, the host mobile projector 1 is located on the left, and the client mobile projector 1A is located on the right.

The user may change the positions of the two mobile projectors 1 and 1A as shown in FIG. 24. That is, the user may position the host mobile projector 1 on the right side and the client mobile projector 1A on the left side.

Then, the host mobile projector 1 may recognize that the relative positions of the two mobile projectors 1 and 1A have changed (S252). That is, the host mobile projector 1 may recognize that the positions of the host mobile projector 1 and the client mobile projector 1A have changed by using the built-in distance sensor, camera, etc.

When recognizing a change in position, the host mobile projector 1 may redistribute two divided images to correspond to the changed position (S253). For example, the host mobile projector 1 transmits the divided image corresponding to the changed position to the client mobile projector 1A. In addition, the host mobile projector 1 prepares to project another divided image corresponding to its changed position.

Next, the two mobile projectors 1 and 1A move to positions appropriate for projecting the divided images, respectively (S254). That is, the host mobile projector 1 may control the left moving part 20 and the right moving part 30 to move to the position of the client mobile projector 1A in FIG. 19, and control the left elevating driver 42 and the right elevating driver 52 to adjust the height so as to project the divided image in the same manner as the client mobile projector 1A in FIG. 19.

In addition, the client mobile projector 1A may control the left moving part 20 and the right moving part 30 to move to the position of the host mobile projector 1 in FIG. 19, and control the left elevating driver 42 and the right elevating driver 52 to adjust the height so as to project the divided image in the same manner as the host mobile projector 1 in FIG. 19.

Finally, when the two mobile projectors 1 and 1A project divided images 101 and 102, a complete image 100 having the same size and aspect ratio as the image of FIG. 19 may be formed on the projection surface 210 (S255).

In the above description, the relative positions of the two mobile projectors 1 and 1A are changed. However, embodiments of the disclosure are not limited thereto. The above-described method may be applied when the relative positions of three or more mobile projectors 1 according to an embodiment of the disclosure are changed.

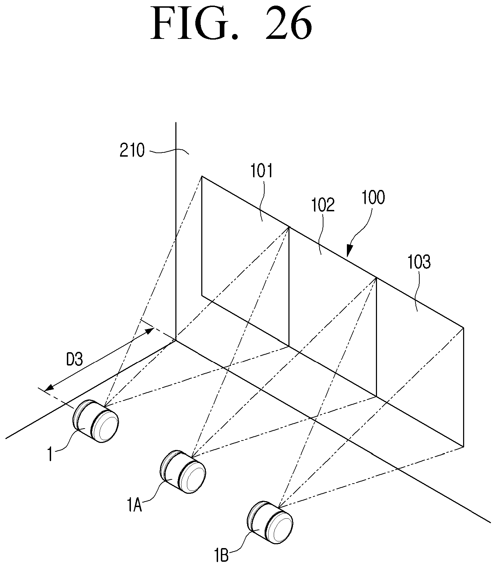

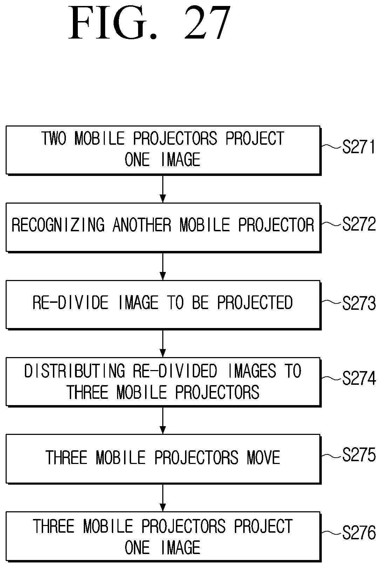

When two mobile projectors 1 and 1A project one image, another mobile projector 1B is added so that three mobile projectors 1, 1A, and 1B may project one image. Hereinafter, an image projection method in this case will be described with reference to FIGS. 26 and 27.

FIG. 26 is a view illustrating a state in which another mobile projector is added in the state of FIG. 19, and three mobile projectors project one image. FIG. 27 is a flowchart for explaining a method of three mobile projectors projecting one image when another mobile projector is added in the state of FIG. 19.

Referring to FIG. 19, two mobile projectors 1 and 1A, that is, a host mobile projector 1 and a client mobile projector 1A, each project divided images 101 and 102 to form one full image 100 (S271).

In this state, the user may add another mobile projector 1B.

Then, the host mobile projector 1 may recognize the added other mobile projector 1B (S272). At this time, the host mobile projector 1 may recognize the other mobile projector 1B using the built-in distance sensor, camera, etc. The host mobile projector 1 may receive spatial information recognized by the other mobile projector 1B and recognize the location of the other mobile projector 1B.

The host mobile projector 1 may recognize the other mobile projector 1B as a second client mobile projector. At this time, the host mobile projector 1 may recognize the existing client mobile projector 1A as a first client mobile projector 1A.

Thereafter, the host mobile projector 1 re-divides the image to be projected (S273). That is, the image to be projected, which was previously divided into two images, is divided into three images.

The host mobile projector 1 distributes three divided images to the three mobile projectors 1, 1A, and 1B based on the locations of the three mobile projectors 1, 1A, and 1B (S274). For example, the host mobile projector 1 transmits a divided image corresponding to the position of the first client mobile projector 1A to the first client mobile projector 1A, and transmits another divided image corresponding to the position of the second client mobile projector 1B to the second client mobile projector 1B. In addition, the host mobile projector 1 prepares to project a divided image corresponding to its position.

The three mobile projectors 1, 1A, and 1B may move to positions appropriate for projecting the divided images, respectively (S275). That is, the three mobile projectors 1, 1A, and 1B move to positions where they may project one image having the same size and aspect ratio as the projection image formed by the two mobile projectors 1 and 1A. The distance D3 between the three mobile projectors 1, 1A, and 1B and the projection surface 210 may be reduced compared to the distance D2 between the two mobile projectors 1 and 1A and the projection surface 210.

At this time, each of the three mobile projectors 1, 1A, and 1B may control the left moving part 20, the right moving part 30, the left elevating driver 42, and the right elevating driver 52 thereof to adjust the size, potion, aspect ratio of the divided image to be projected.

Finally, when the three mobile projectors 1, 1A, and 1B project divided images 101, 102, and 103, a complete image 100 having the same size and aspect ratio as the image of FIG. 19 may be formed on the projection surface 210 (S276).

In the above description, the other mobile projector 1B is added to two mobile projectors 1 and 1A that project one projection image. However, the disclosure is not limited thereto. Embodiments of the disclosure may include a case where another mobile projector 1 is added to three or more mobile projectors 1 that project one projection image.

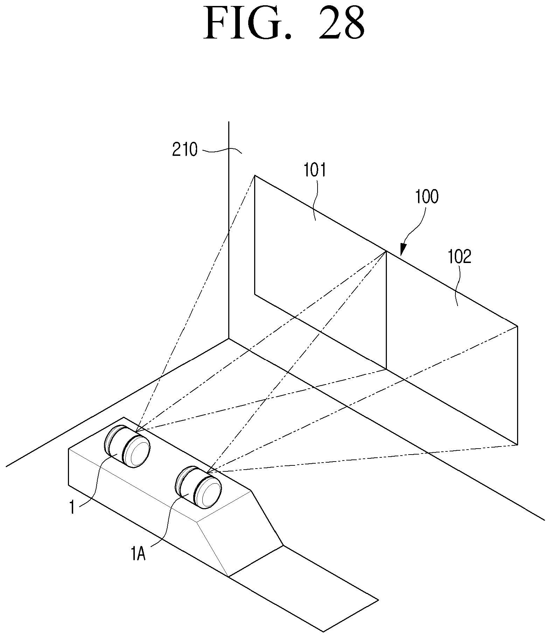

In addition, according to an embodiment of the disclosure, when the height of one of the plurality of mobile projectors 1 and 1A changes while projecting one image, the mobile projector 1A whose height has changed may automatically adjust the height of the projection image to maintain the initial size and aspect ratio of the projection image. This will be described below with reference to FIGS. 28 to 30.

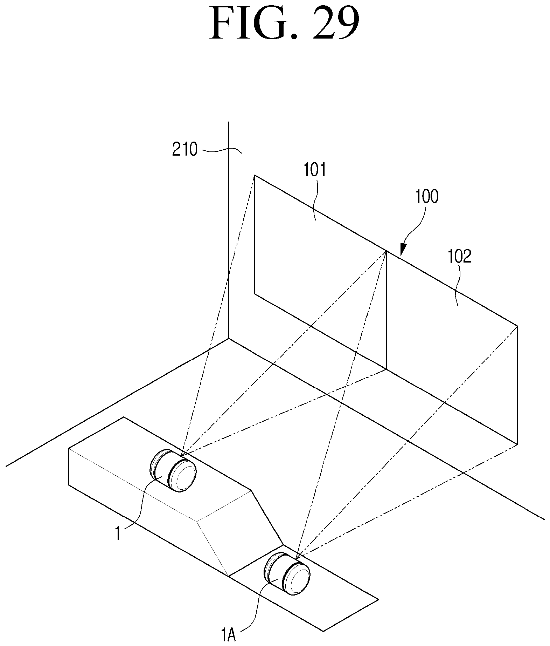

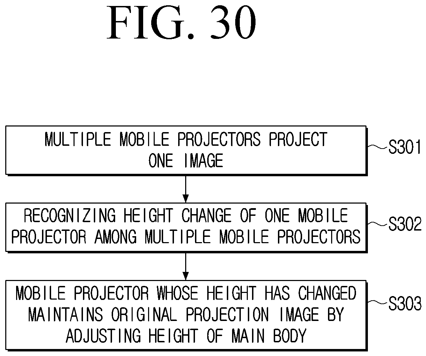

FIG. 28 is a view illustrating a state in which two mobile projectors project one image at the same height according to an embodiment of the disclosure. FIG. 29 is a view illustrating a state in which the height of one mobile projector is changed in the state of FIG. 28. FIG. 30 is a flowchart for explaining a method of maintaining the images projected by two mobile projectors to be the same when the state of FIG. 28 is changed to the state of FIG. 29.

Referring to FIG. 28, two mobile projectors 1 and 1A positioned at the same height H project divided images 101 and 102 to form one complete image 100 on a projection surface 210 (S301).

At this time, the height of one of the two mobile projectors 1 and 1A may be changed. For example, the first mobile projector 1 may be maintained at the height H, while the second mobile projector 1A may be positioned at a low position, that is, on the floor. The height of the second mobile projector 1A may be lowered by the user.

When the position of the second mobile projector 1A is lowered, the second mobile projector 1A may recognize that its height has changed (S302). When the second mobile projector 1A is lowered, the second mobile projector 1A may recognize the lowered height using the built-in distance sensor, camera, etc.

The second mobile projector 1A may maintain the original projection image by adjusting the height of the main body 10 thereof (S303). For example, the second mobile projector 1A may raise the main body 10 thereof by the lowered height by controlling the left elevating driver 42 and the right elevating driver 52 thereof. Then, the height of the divided image projected by the second mobile projector 1A is raised, so that the original projection image 100 may be maintained.

As described above, the mobile projector according to an embodiment of the disclosure may automatically detect and correct distortion of a projection image. In addition, the mobile projector according to an embodiment of the disclosure may automatically detect the tilt of a projection image and make the tilted projection image horizontal.

In addition, a plurality of mobile projectors according to an embodiment of the disclosure may form a projection system. The plurality of mobile projectors forming the projection system may project divided images to form one complete image on a projection surface. At this time, when another mobile projector is added, the plurality of mobile projectors may automatically adjust their positions to maintain the size and aspect ratio of an original projection image.

In the foregoing, the disclosure has been shown and described with reference to various embodiments. However, it is understood by those skilled in the art that various changes may be made in form and detail without departing from the scope of the disclosure as defined by the appended claims and equivalents thereof.

## Claims

1. A mobile projector comprising:
a main body comprising a projector;
a left moving part on a left side of the main body;
a right moving part on a right side of the main body symmetrically with the left moving part;
a left elevating part between the left side of the main body and the left moving part,
the left elevating part configured to move the left moving part up and down with respect to the main body; and
a right elevating part between the right side of the main body and the right moving part, the right elevating part configured to move the right moving part up and down
with respect to the main body.

2. The mobile projector of claim 1, further comprising:
an auxiliary moving part on a lower surface of the main body.

3. The mobile projector of claim 1, wherein
the left elevating part comprises:
a left elevating plate on which the left moving part is disposed, the left elevating plate configured to move up and down with respect to the left side of the main body; and
a left elevating driver inside the main body and configured to move the left elevating plate up and down, and
wherein the right elevating part comprises:
a right elevating plate on which the right moving part is disposed, the right elevating plate configured to move up and down with respect to the right side of the main body; and
a right elevating driver disposed inside the main body and configured to move the right elevating plate up and down.

4. The mobile projector of claim 3, further comprising:
a first pair of linear movement guide members between the left elevating plate and the left side of the main body and configured to guide up and down movement of the left elevating plate; and
a second pair of linear movement guide members between the right elevating plate and the right side of the main body and configured to guide up and down movement of the right elevating plate.

5. The mobile projector of claim 3, wherein
the left elevating driver comprises:
a left elevating motor in the main body;
a left pinion configured to be rotated by the left elevating motor; and
a left rack on the left elevating plate and meshed with the left pinion, and
wherein the right elevating driver comprises:
a right elevating motor in the main body;
a right pinion configured to be rotated by the right elevating motor; and
a right rack on the right elevating plate and meshed with the right pinion.

6. The mobile projector of any one of claims 3 to 5, wherein
the left moving part comprises:
a left wheel motor on the left elevating plate; and
a left wheel configured to be rotated by the left wheel motor, and
wherein the right moving part comprises:
a right wheel motor on the right elevating plate; and
a right wheel configured to be rotated by the right wheel motor.

7. The mobile projector of claim 1, wherein
the projector is detachably disposed in the main body.

8. The mobile projector of claim 1, wherein
the main body comprises:
a projector accommodating portion, wherein the projector is detachably disposed in the projector accommodating portion; and
a base below the projector accommodating portion, wherein the left elevating part
and the right elevating part are on the base.

9. The mobile projector of claim 1, further comprising:
a processor configured to individually control the left moving part, the right moving part, the left elevating part, and the right elevating part.

10. The mobile projector of claim 9, wherein
the main body comprises at least one sensor, and
wherein the at least one sensor comprises at least one from among an image sensor, a distance sensor, a direction sensor, and an illuminance sensor.

11. The mobile projector of claim 10, wherein
the processor is configured to control the left moving part, the right moving part, the left elevating part, and the right elevating part based on a signal input from the at least one sensor to adjust size, position, height, and horizontality of an image projected by the projector.

12. An image projecting method performed by a mobile projector, the image projecting method comprising:
receiving a projection command;
searching for a projectable surface;
transmitting information about a searched projectable surface;
receiving projection information;
moving to a position corresponding to the projection information that is received; and
projecting an image corresponding to the projection information.

13. The image projecting method of claim 12, wherein
the projecting the image corresponding to the projection information comprises controlling, by the mobile projector, at least one from among a left moving part, a right moving part, a left elevating driver, and a right elevating driver of the mobile projectors to adjust at least one from among a size, position, height, and horizontality of the image that is projected.

14. A method for forming a projection system of a mobile projector, the method comprising:
acquiring, by a first mobile projector, spatial information of surroundings of the first mobile projector;
determining, by the first mobile projector, that a second mobile projector exists based on the spatial information that is acquired;
transmitting, by the first mobile projector, projector connection information based on determining that the second mobile projector exists;
receiving, by the first mobile projector, a response to the projector connection information; and
connecting, by the first mobile projector, the second mobile projector based on the response to the projector connection information indicating that the second mobile projector is to be connected.

15. The method of claim 14, further comprising:
projecting an image by the first mobile projector and the second mobile projector project.
